(19) Europäisches Patentamt
European Patent Office
Office européen des brevets

(11) **EP 4 685 753 A1**

(12) **EUROPEAN PATENT APPLICATION**
published in accordance with Art. 153(4) EPC

(43) Date of publication:
**28.01.2026 Bulletin 2026/05**

(21) Application number: **24796086.7**

(22) Date of filing: **24.04.2024**

(51) International Patent Classification (IPC):
**G06T 19/20** (2011.01)

(52) Cooperative Patent Classification (CPC):
**G06F 3/04855; G06T 13/20; G06T 19/20**

(86) International application number:
**PCT/CN2024/089432**

(87) International publication number:
**WO 2024/222706 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.04.2023 CN 202310475184**

(71) Applicants:
• **Huawei Technologies Co., Ltd.
Shenzhen, Guangdong 518129 (CN)**
• **Hangzhou Jingtu Technology Co., Ltd.
Hangzhou, Zhejiang 310061 (CN)**

(72) Inventors:
• **DING, Ruolan
Shenzhen, Guangdong 518129 (CN)**
• **YIN, Shi
Shenzhen, Guangdong 518129 (CN)**
• **GUO, Yachao
Hangzhou, Zhejiang 310061 (CN)**

(74) Representative: **Thun, Clemens et al
Mitscherlich PartmbB
Patent- und Rechtsanwälte
Karlstraße 7
80333 München (DE)**

(54) **GEOMETRIC MODEL NAVIGATION METHOD AND COMPUTING DEVICE**

(57) This application provides a geometric model navigation method and a computing device, and relates to the field of computer software. The method includes: obtaining an operation of a user on a geometric feature in a geometric model; and adjusting a view angle of the geometric model from a current location of the geometric model to an observation location of the geometric feature, where the observation location of the geometric feature is a location at which the geometric feature is presented to the user. Based on the foregoing method, the observation location of the geometric feature is automatically located based on the operation of the user on the geometric feature in the geometric model. In comparison with an operation of manually searching for the observation location, this improves efficiency of locating the geometric feature in the geometric model to the corresponding observation location.

300

Obtain an operation of a user on a geometric feature in a geometric model — 310

Adjust a view angle of the geometric model from a current location of the geometric model to an observation location of the geometric feature, where the observation location of the geometric feature is a location at which the geometric feature is presented to the user — 320

FIG. 3

## Description

This application claims priority to Chinese Patent Application No. 202310475184.6, filed with the China National Intellectual Property Administration on April 25, 2023 and entitled "GEOMETRIC MODEL NAVIGATION METHOD AND COMPUTING DEVICE", which is incorporated herein by reference in its entirety.

## TECHNICAL FIELD

This application relates to the field of computer software, and in particular, to a geometric model navigation method and a computing device.

## BACKGROUND

With continuous development of computer computing capabilities, three-dimensional (3-dimensional, 3D) drawing software or geometric simulation software has been widely applied to various fields such as fluid, electric power, and nuclear energy. A geometric model constructed by a user usually includes a plurality of geometric features, for example, a stretch feature, a cut feature, or another defect feature. When the geometric feature needs to be observed, the geometric model usually needs to be manually dragged to an observation location of the corresponding geometric feature, which is complex and inefficient.

## SUMMARY

This application provides a geometric model navigation method and a computing device, to improve efficiency of locating a geometric feature in a geometric model to a corresponding observation location.

According to a first aspect, this application provides a geometric model navigation method, applied to a computing device. The method includes: obtaining an operation of a user on a geometric feature in a geometric model; and adjusting a view angle of the geometric model from a current location of the geometric model to an observation location of the geometric feature. The observation location of the geometric feature is a location at which the geometric feature is presented to the user.

Based on the geometric model navigation method provided in this application, the observation location of the geometric feature is automatically located based on the operation of the user on the geometric feature in the geometric model. In comparison with an operation of manually searching for the observation location, this improves efficiency of locating the geometric feature in the geometric model to the corresponding observation location.

With reference to the first aspect, in some possible implementations of the first aspect, the geometric model includes a plurality of geometric features, and adjusting the current location of the geometric model to the observation location of the geometric feature includes: sequentially adjusting, based on a sequence of the plurality of geometric features, the view angle of the geometric model from the current location of the geometric model to an observation location of each geometric feature.

The geometric model may include the plurality of geometric features, and adjusting the current location of the geometric model to the observation location of the geometric feature may be traversing observation locations of the plurality of geometric features, that is, sequentially adjusting the view angle to the observation location of each geometric feature.

With reference to the first aspect, in some possible implementations of the first aspect, the sequence of the plurality of geometric features is a sequence of impact factors of the plurality of geometric features on the geometric model.

There are a plurality of sorting modes, including sorting by name, sorting by modification time, and sorting by impact factor.

With reference to the first aspect, in some possible implementations of the first aspect, the computing device includes a display, a display region of the display includes a first region and a second region, the first region is used to display the geometric model, and the second region is used to display a control of the geometric feature; and the operation of the user on the geometric feature in the geometric model includes an operation of the user on a geometric feature in the first region or an operation on a control of the geometric feature in the second region.

The display region may include the first region used to display the geometric model and the second region used to display the control of the geometric feature. The user may perform an operation on the geometric feature in the geometric model in the first region, or may perform an operation on the control of the geometric feature in the second region.

With reference to the first aspect, in some possible implementations of the first aspect, the control of the geometric feature includes a control for traversing a plurality of geometric features or controls of a plurality of geometric features, and the traversing of the plurality of geometric features indicates to sequentially adjust the view angle of the geometric model to an observation location corresponding to each geometric feature.

The control for traversing the plurality of geometric features may be, for example, a button of "Traverse geometric features". The user may click the button to indicate to traverse observation locations of the plurality of geometric features, that is, sequentially adjust the view angle to the observation location of each geometric feature.

With reference to the first aspect, in some possible implementations of the first aspect, the method further includes: generating a view angle animation in a process of adjusting the view angle of the geometric model from the current location of the geometric model to the observation location of the geometric feature, where the view angle animation is used to describe the process of adjusting the view angle of the geometric model from the current location of the geometric model to the observation location of the geometric feature.

With reference to the first aspect, in some possible implementations of the first aspect, the method further includes: presenting the view angle animation in the first region.

With reference to the first aspect, in some possible implementations of the first aspect, the view angle animation includes a scrolling progress bar, and the method further includes: adjusting a progress of the view angle animation in response to an operation of the user on the scrolling progress bar.

The view angle animation is generated, so that the user ca view a process of moving the view angle from the current location to the observation location.

With reference to the first aspect, in some possible implementations of the first aspect, the method further includes: determining the observation location of the geometric feature based on a type of the geometric feature.

For different types of geometric features, appropriate observation locations are different. Therefore, the observation location of the geometric feature may be determined based on the type of the geometric feature.

With reference to the first aspect, in some possible implementations of the first aspect, if the type of the geometric feature is a gap, the observation location is located on a plane that has equal distances from two surfaces forming the gap, distances from the observation location to two ends of the gap are equal, and a length of the gap accounts for a preset proportion of a field of view length, where the gap is a gap between two surfaces that are not in contact with each other, and a distance between the two surfaces is less than a preset gap threshold. If the type of the geometric feature is a free edge, a degenerated edge, overlapping edges, or a small edge, the observation location is located on a perpendicular bisector of the edge, and a length of the edge accounts for a preset proportion of a field of view length, where the free edge is an edge associated with at most one surface, the degenerated edge is an edge whose length is less than or equal to a preset degenerated edge threshold, the overlapping edges are two edges between which a distance is less than a preset overlapping threshold, and the small edge is an edge whose length is less than a preset small edge threshold and greater than the degenerated edge threshold. If the type of the geometric feature is a puncture, the observation location is located on a perpendicular bisector of an edge formed by intersection of two surfaces, and a length of the edge accounts for a preset proportion of a field of view length, where the puncture indicates that two surfaces intersect each other. If the type of the geometric feature is a free surface, a degenerated surface, overlapping surfaces, or an elongated surface, the observation location is located on a normal line of a center point of the surface, and a straight-line distance between two ends of a longest chain of the surface accounts for a preset proportion of a field of view length, where the free surface is a surface associated with at most one surface, the degenerated surface is a surface whose area is less than a preset degenerated surface threshold and that has a degenerated edge, the overlapping surfaces are two surfaces between which a distance is less than an overlapping threshold, and the elongated surface is a surface whose area divided by a length of a longest chain is less than a preset elongated surface threshold, where the longest chain is a longest chain formed by connecting, in series, all adjacent edges between which an included angle is less than a preset angle on the surface. If the type of the geometric feature is a small angle, the observation location is located on a perpendicular bisector that is of a longer edge in two edges forming the small angle and that is in a direction of a normal vector of a plane on which the small angle is located, and a length of the longer edge accounts for a preset proportion of a field of view length, where the small angle is an angle less than a preset small angle threshold. If the type of the geometric feature is a small concave mesa or a small convex mesa, the observation location is located on a plane on which the mesa is located, and a length of a two-dimensional projection of the mesa on a field of view plane accounts for a preset proportion of a field of view length, where the small concave mesa is a concave mesa whose concave distance is less than a preset small mesa threshold, and the small convex mesa is a convex mesa whose protrusion distance is less than the preset small mesa threshold. If the type of the geometric feature is a chamfer, the observation location is located on a normal line of a chamfer surface, and a length of an intersection line between the chamfer surface and an adjacent surface accounts for a preset proportion of a field of view length.

With reference to the first aspect, in some possible implementations of the first aspect, the method further includes: determining a path for adjusting the view angle of the geometric model from the current location of the geometric model to the observation location of the geometric feature. The path includes at least one of the following: an arc path on a sphere that uses a preset reference location as a sphere center, a straight-line path that passes through the observation location of the geometric feature, and a straight-line path that passes through the current location of the geometric model.

Adjusting the view angle from the current location to the observation location may be moving along a path. Therefore, the path may be first determined, and then the view angle is moved based on the path. The path may include the arc path on the sphere on which the view angle is located, and the straight-line path from the sphere on which the view angle is located to the observation location. If an initial location of the view angle is excessively far or excessively close to the geometric model, the view angle may be moved forward or backward, so that the geometric model is entirely located in a field of view of the view angle, which facilitates viewing by the user.

With reference to the first aspect, in some possible implementations of the first aspect, the geometric model includes the plurality of geometric features, a geometric feature selected by the user is a target geometric feature, and the method further includes: when the target geometric feature is occluded by another geometric feature, displaying the another geometric feature semi-transparently, or displaying only a contour line of the another geometric feature.

When the target geometric feature is occluded, the another geometric feature that occludes the target geometric feature is displayed semi-transparently or only the contour line is displayed, so that the target geometric feature is exposed, which helps the user observe the target geometric feature.

With reference to the first aspect, in some possible implementations of the first aspect, the method further includes: highlighting the target geometric feature.

Highlighting the target geometric feature helps the user observe the target geometric feature.

According to a second aspect, this application provides a computing device, including a module or a unit configured to implement the method according to any one of the first aspect and the possible implementations of the first aspect. It should be understood that each module or unit may implement a corresponding function by executing a computer program.

According to a third aspect, this application provides a computing device, including a memory and a processor. The memory is configured to store a computer program, and the processor is configured to invoke and execute the computer program, to implement the geometric model navigation method according to any one of the first aspect and the possible implementations of the first aspect.

According to a fourth aspect, this application provides a computer-readable storage medium, including a computer program. When the computer program is run on a computer, the computer is enabled to implement the method according to any one of the first aspect and the possible implementations of the first aspect.

According to a fifth aspect, this application provides a computer program product. The computer program product includes a computer program (which may also be referred to as code or instructions). When the computer program is run, the computer is enabled to perform the method according to any one of the first aspect and the possible implementations of the first aspect.

It should be understood that the technical solutions of the second aspect to the fifth aspect correspond to the first aspect, and beneficial effect achieved by the aspects and the corresponding feasible implementations are similar. Details are not described again.

## BRIEF DESCRIPTION OF DRAWINGS

FIG. 1 is a diagram of a scenario to which a geometric model navigation method according to an embodiment of this application is applicable;
FIG. 2 is a diagram of a possible geometric feature in a geometric model navigation method according to an embodiment of this application;
FIG. 3 is a schematic flowchart of a geometric model navigation method according to an embodiment of this application;
FIG. 4 is a diagram of a view angle of a geometric model according to an embodiment of this application;
FIG. 5 is a three-view diagram of a geometric model from a view angle according to an embodiment of this application;
FIG. 6 is a diagram of a geometric model including a gap according to an embodiment of this application;
FIG. 7 is a diagram of observation location calculation according to an embodiment of this application;
FIG. 8 is a diagram of a path of a view angle according to an embodiment of this application;
FIG. 9 is another diagram of a path of a view angle according to an embodiment of this application;
FIG. 10 is a diagram of a geometric model including a free surface according to an embodiment of this application;
FIG. 11 is a diagram in which a geometric feature is occluded by another surface that does not belong to the geometric feature in a geometric model according to an embodiment of this application;
FIG. 12 is a diagram in which a geometric feature is occluded by a surface that belongs to the geometric feature in a geometric model according to an embodiment of this application;
FIG. 13 is a diagram of a display region of geometric simulation software according to an embodiment of this application;
FIG. 14 is a block diagram of a computing device according to an embodiment of this application; and
FIG. 15 is another block diagram of a computing device according to an embodiment of this application.

## DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely a part rather than all of embodiments of this application.

Therefore, the following detailed descriptions of embodiments of this application provided in the accompanying drawings are not intended to limit the scope of this application, but merely to represent selected embodiments of this application. All other embodiments obtained by a person of ordinary skill in the art based on embodiments of this application without creative efforts shall fall within the protection scope of this application.

In embodiments of this application, the terms "first", "second", and the like are intended to distinguish between similar objects but do not necessarily indicate a specific order or sequence. Further, the term "include" and any variation thereof are intended to cover a non-exclusive inclusion.

The following describes the technical solutions in this application with reference to the accompanying drawings.

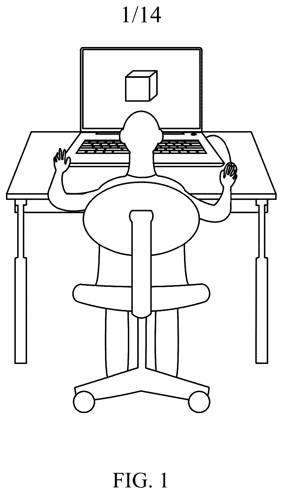

FIG. 1 is a diagram of a scenario to which a geometric model navigation method according to an embodiment of this application is applicable. Currently, users often use geometric simulation software during industrial design. The users can construct and view geometric models in the geometric simulation software. The geometric model constructed by the user in the geometric simulation software inevitably has a defect. Therefore, the user needs to perform geometric cleaning and repair on the defect of the geometric model. Before performing geometric cleaning and repair on the defect of the geometric model, the user first needs to quickly locate and observe a geometric feature that may be the defect. When the geometric model is displayed in the current geometric simulation software, usually only geometric features are listed. In a navigation function provided by the geometric simulation software, each geometric feature included in the geometric model is encoded, a code of a current geometric feature is indexed, and the current geometric feature is colored and rendered, to highlight the current geometric feature. When the geometric feature is observed, the geometric model needs to be manually dragged to an observation location of the corresponding geometric feature. This is complex and inefficient.

In view of this, this application proposes a geometric model navigation method, so that the observation location of the geometric feature is automatically located based on an operation of the user on the geometric feature in the geometric model. In comparison with an operation of manually searching for the observation location, this improves efficiency of locating the geometric feature in the geometric model to the corresponding observation location.

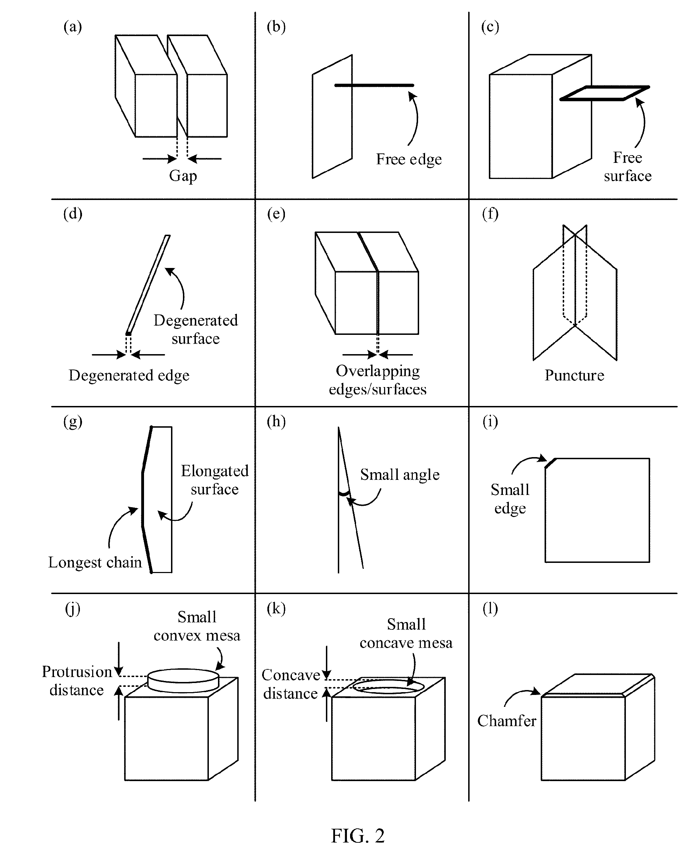

To better understand the geometric model navigation method provided in embodiments of this application, a type of a possible geometric feature in the geometric model navigation method provided in embodiments of this application is first described with reference to FIG. 2.

Gap: As shown in (a) in FIG. 2, the gap is a gap between two surfaces that are not in contact with each other, and a distance between the two surfaces is less than a preset gap threshold.

Free edge: As shown in (b) in FIG. 2, the free edge is an edge associated with at most one surface.

Free surface: As shown in (c) in FIG. 2, the free surface is a surface associated with at most one surface.

Degenerated edge: As shown in (d) in FIG. 2, the degenerated edge is an edge whose length is less than or equal to a preset degenerated edge threshold. The degenerated edge is generally obtained due to an operation error of a drawing person. In a general scale of the geometric model, the degenerated edge is degenerated to a point because the length is excessively short. Similarly, a surface whose area is less than a preset degenerated surface threshold and that has a degenerated edge is a degenerated surface. In the general scale of the geometric model, the degenerated surface is degenerated to an edge.

Overlapping edges: As shown in (e) in FIG. 2, the overlapping edges are two edges between which a distance is less than a preset overlapping threshold, and the overlapping threshold is less than the gap threshold. Similarly, overlapping surfaces are two surfaces between which a distance is less than the overlapping threshold.

Puncture: As shown in (f) in FIG. 2, the puncture indicates that two surfaces intersect each other.

Elongated surface: As shown in (g) in FIG. 2, the elongated surface is a surface whose area divided by a length of a longest chain is less than a preset elongated surface threshold. All adjacent edges on the surface between which an included angle is less than a preset angle are connected in series to form a chain, and a chain with a longest length is the longest chain.

Small angle: As shown in (h) in FIG. 2, the small angle is an angle less than a preset small angle threshold.

Small edge: As shown in (i) in FIG. 2, the small edge is an edge whose length is less than a preset small edge threshold and greater than the degenerated edge threshold. A difference between the small edge and the degenerated edge lies in that, in the general scale of the geometric model, the small edge is not degenerated to a point. However, because the length of the small edge is short, the geometric model may also be affected.

Small convex mesa: As shown in (j) in FIG. 2, the small convex mesa is a convex mesa whose protrusion distance is less than a preset small mesa threshold.

Small concave mesa: As shown in (k) in FIG. 2, the small concave mesa is a concave mesa whose concave distance is less than the preset small mesa threshold.

Chamfer: As shown in (1) in FIG. 2, chamfering is a process of cutting a corner of the geometric model into a specific slope. In addition, normal angles between a chamfer surface and two adjacent surfaces are within a preset chamfer range, and the chamfer range may be, for example, 25 degrees to 65 degrees.

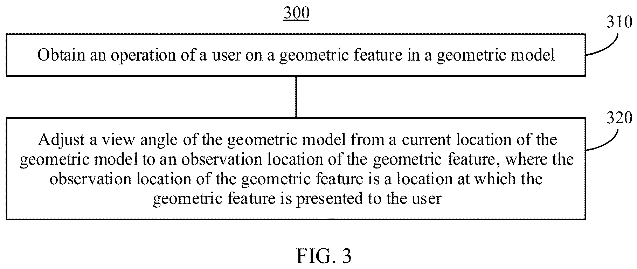

FIG. 3 is a schematic flowchart of a geometric model navigation method according to an embodiment of this application. A method 300 may be performed by a computing device. The computing device may be a computer or another electronic device that runs geometric simulation software. This is not limited in this application.

The method 300 shown in FIG. 3 may include step 310 and step 320. The following describes each step in the method 300 in detail.

Step 310: Obtain an operation of a user on a geometric feature in a geometric model.

The computing device may include a display. When using geometric simulation software, the user may perform an operation on a geometric feature in a display region of the display. The display region may include a first region and a second region. The first region may be used to display the geometric model, and the second region may be used to display a control of the geometric feature.

The control of the geometric feature may be, for example, in a form of button or a form of link, and the control of the geometric feature may include a control for traversing a plurality of geometric features or controls of a plurality of geometric features.

Traversing the plurality of geometric features may indicate to sequentially adjust the view angle of the geometric model to an observation location corresponding to each geometric feature, and each of the controls of the plurality of geometric features may indicate selection of the geometric feature.

The operation of the user on the geometric feature in the geometric model may be an operation on a geometric feature in the first region or an operation on a control of the geometric feature in the second region.

The operation on the geometric feature in the first region may include, for example, selecting, dragging, or rotating the geometric feature. The operation on the control of the geometric feature in the second region may include an operation of tapping the control of the geometric feature.

Step 320: Adjust the view angle of the geometric model from a current location of the geometric model to the observation location of the geometric feature, where the observation location of the geometric feature is a location at which the geometric feature is presented to the user.

The observation location of the geometric feature is coordinates of a view angle of the geometric model in three-dimensional space of the geometric model.

When the user views the geometric model by using the geometric simulation software, a two-dimensional projection of the geometric model at a specific angle is presented in a display region of the geometric simulation software. The two-dimensional projection may be considered as a scene seen by an "eye" in the three-dimensional space in which the geometric model is located. When a field of view (field of view, FOV) of the "eye" is fixed, the closer to the geometric model, the better the details of the geometric model can be seen. The "eye" for viewing the geometric model in the three-dimensional space may be referred to as a view angle of the geometric model, and is referred to as the "view angle" for short in the following.

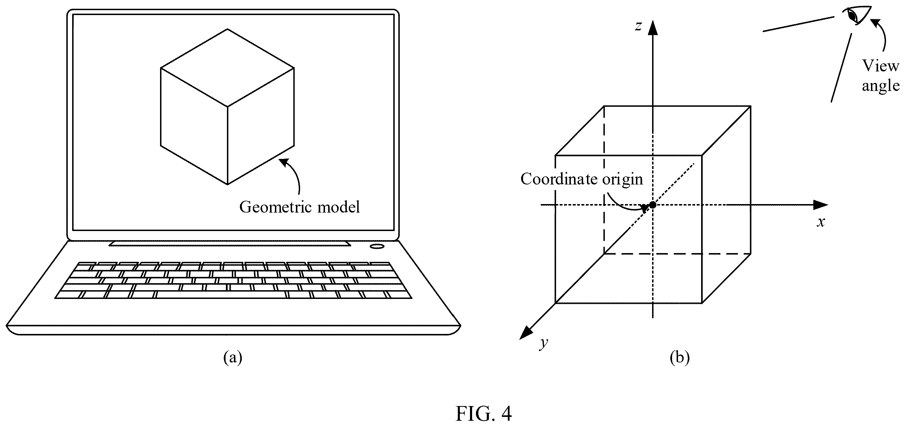

As shown in (a) in FIG. 4, a two-dimensional projection of a geometric model is presented in a display region of geometric simulation software. As shown in (b) in FIG. 4, the two-dimensional projection of the geometric model presented in the display region of the geometric simulation software may be considered as a scene observed from a view angle.

A location of the view angle in three-dimensional space of the geometric model may be represented by a three-dimensional coordinate.

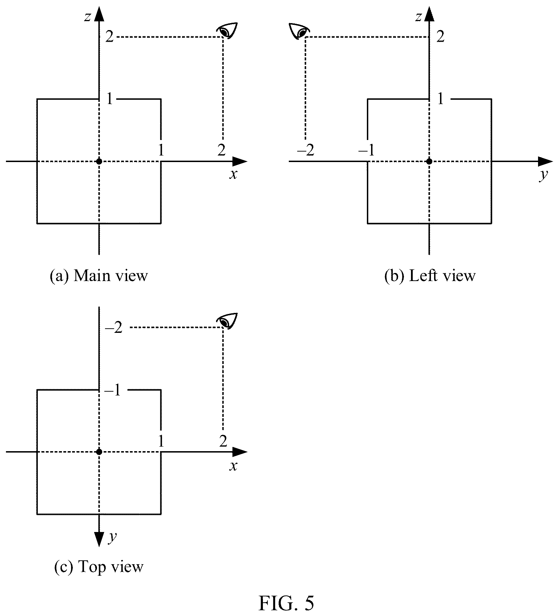

In an example, in the three-dimensional space shown in (b) in FIG. 4, a three-view diagram of the geometric model from the view angle is shown in FIG. 5. It can be learned from FIG. 5 that the location of the view angle is (2, -2, 2).

Optionally, before the field of view is adjusted from the current location to an observation location of a geometric feature, the observation location of the geometric feature may be first determined based on a type of the geometric feature.

A user may select the geometric feature by performing an operation of tapping a control of the geometric feature, to determine the type of the geometric feature.

For different types of geometric features, observation locations meet different conditions. Therefore, the observation locations need to be calculated based on the conditions that the observation locations of the geometric features with different attributes meet.

For a geometric feature of a specific type, different users are accustomed to different observation locations. Therefore, the user may preset correspondences between different types of geometric features and the conditions that the observation locations meet. Generally, the condition that the observation location meets may reflect a geometric occlusion relationship, that is, when the view angle is located at the observation location, the geometric feature is less occluded, and is easy to be observed.

The following lists correspondences between types of some geometric features and conditions that the observation locations meet.

Gap: The observation location is located on a plane that has equal distances from two surfaces forming the gap, distances from the observation location to two ends of the gap are equal, and a length of the gap accounts for a preset proportion of a field of view length. The preset proportion is, for example, a half.

Free edge, degenerated edge, overlapping edges, and small edge: The observation location is located on a perpendicular bisector of the edge, and a length of the edge accounts for a preset proportion of a field of view length. The preset proportion is, for example, a half.

Puncture: The observation location is located on a perpendicular bisector of an edge formed by intersection of two surfaces, and a length of the edge accounts for a preset proportion of a field of view length. The preset proportion is, for example, a half.

Free surface, degenerated surface, overlapping surfaces, and elongated surface: The observation location is located on a normal line of a center point of the surface, and a length of a straight-line distance between two ends of a longest chain of the surface accounts for a preset proportion of a field of view length. The preset proportion is, for example, a half.

Small angle: The observation location is located on a perpendicular bisector that is of a longer edge in two edges forming the small angle and that is in a direction of a normal vector of a plane on which the small angle is located, and a length of the longer edge accounts for a preset proportion of a field of view length. The preset proportion is, for example, a half.

Small convex mesa and small concave mesa: The observation location is located on a plane on which the mesa is located, and a length of a two-dimensional projection of the mesa on a field of view plane accounts for a preset proportion of a field of view length. The preset proportion is, for example, a half.

Chamfer: The observation location is located on a normal line of a chamfer surface, and a length of an intersection line between the chamfer surface and an adjacent surface accounts for a preset proportion of a field of view length. The preset proportion is, for example, a half.

It should be understood that the location that meets the conditions in the three-dimensional space may not be unique, and one of a plurality of locations that meet the conditions may be selected as the observation location, or a location closest to the current location of the view angle may be selected from the plurality of locations that meet the conditions as the observation location. Alternatively, a location with least occlusion may be selected from the plurality of locations that meet the conditions as the observation location. This is not limited in this application.

It should be further understood that the correspondences between the feature types and the conditions that the observation locations meet are merely examples. A correspondence between each type of geometric feature and the condition that the observation location meets is not limited in this application.

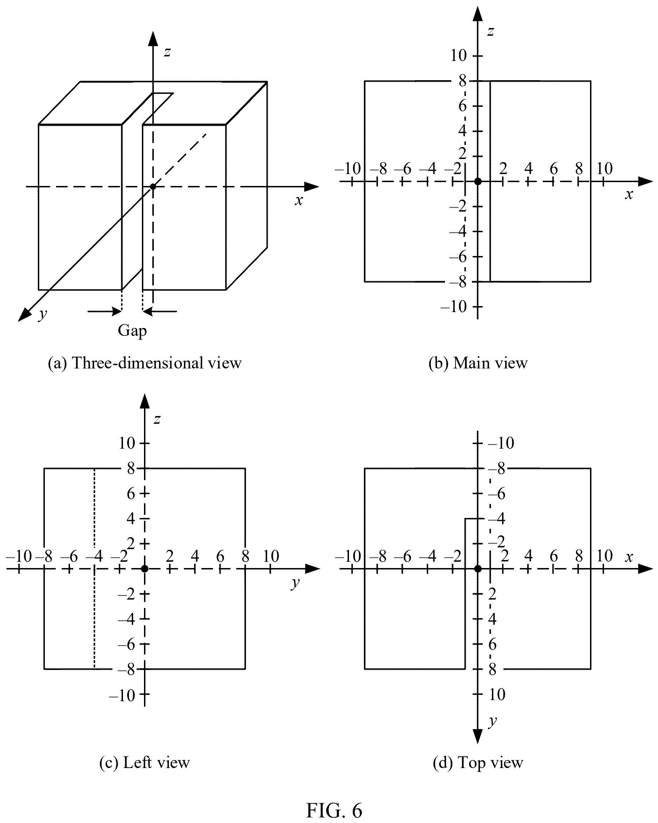

For example, in a geometric model shown in FIG. 6, a geometric feature of a gap type is included. The gap is a cuboid region including eight vertices: (1, 8, 8), (-1, 8, 8), (-1, -4, 8), (1, -4, 8), (1, 8, -8), (-1, 8, -8), (-1, -4, -8), and (1, -4, -8). One endpoint of the gap is a midpoint (0, 8, 8) of (1, 8, 8) and (-1, 8, 8), and the other endpoint is a midpoint (0, 8, -8) of (1, 8, -8) and (-1, 8, -8). A length of the gap is a distance 16 between the two endpoints. Two planes forming the gap are respectively x=1 and x=-1, and a plane having an equal distance from the two planes is x=0. In this case, an observation location is located on the plane x=0. On the x=0 plane, points having a same distance to (0, 8, 8) and (0, 8, -8) are located on a y-axis.

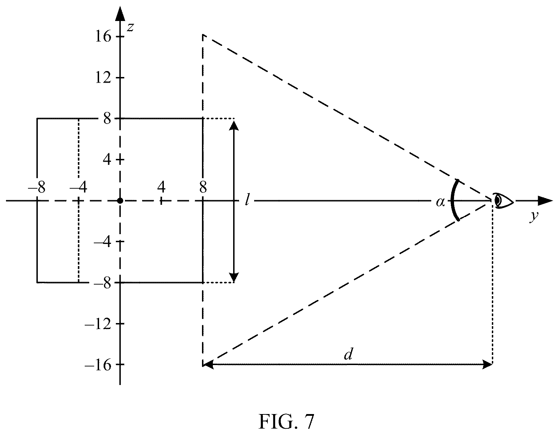

As shown in FIG. 7, an FOV of the view angle is $\alpha$. To make a length l of a gap account for a half of a field of view length, a distance d from the view angle to a geometric model satisfies:

$$d = \frac{l}{\tan \alpha/2}$$

If l=16, coordinates of an observation location are $\left(0, \ 8+\dfrac{16}{\tan \alpha/2}, \ 0\right)$.

For example, if $\alpha$=60°, the coordinates of the observation location are $\left(0, \ 8+16\sqrt{3}, \ 0\right)$. If $\alpha$=90°, the coordinates of the observation location are (0, 24, 0).

Optionally, after an observation location of a geometric feature is determined, a path for adjusting the view angle from a current location to the geometric feature may be determined.

When viewing the geometric model by using geometric simulation software, a user may randomly adjust the location of the view angle. Therefore, the current location of the view angle may be any location in three-dimensional space.

If the view angle is at the current location, and the geometric model is entirely in the field of view of the view angle, the path may include two parts.

A first part is an arc path from the current location (a first location) to a second location. A distance from the first location to a preset reference location is equal to a distance from the second location to the reference location, the arc path is on a sphere that uses the reference location as a sphere center and uses a distance from the first location to the reference location as a radius, and an extension line of a connection line between the second location and the observation location passes through the reference location.

It should be understood that, if a connection line between the first location and the second location does not pass through the reference location, a shortest arc path exists between the first location and the second location on the sphere; or if a connection line between the first location and the second location passes through the reference location, an infinite quantity of arc paths with an equal length exist between the first location and the second location on the sphere, and any arc path may be selected from the infinite quantity of arc paths as the path of the view angle.

A second part is a straight-line path from the second location to the observation location.

For example, if $\alpha$=90°, the preset reference location is a coordinate origin, the observation location is (0, 24, 0), and the current location of the view angle is (0, 0, 30). If the view angle is at the current location, and the geometric model is entirely in the field of view of the view angle, the path may include two parts, and the current location of the view angle is the first location.

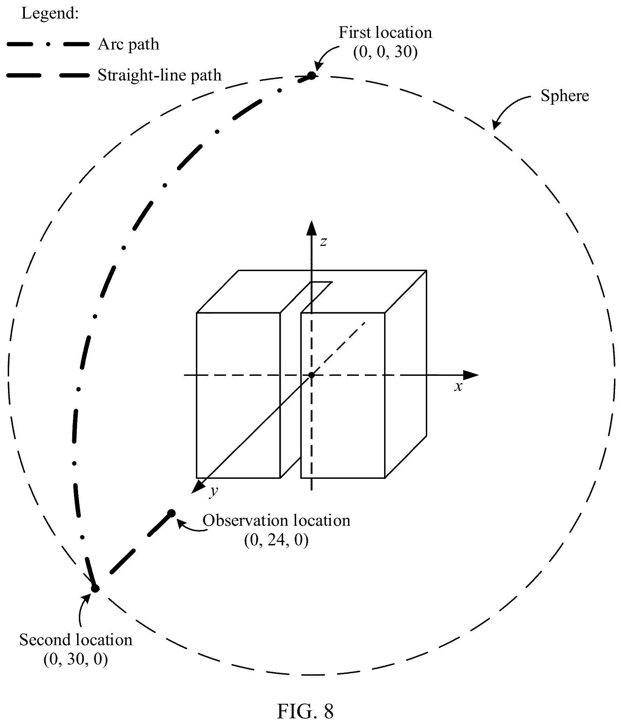

As shown in FIG. 8, the first location is (0, 0, 30), a distance from the second location to the coordinate origin is equal to a distance from the first location to the coordinate origin, and the distances are both 30. The observation location is (0, 24, 0), and the extension line of the connection line between the second location and the observation location passes through the coordinate origin. Therefore, it may be determined that the second location is (0, 30, 0).

The first part of the path is an arc path from the first location (0, 0, 30) to the second location (0, 30, 0) on the sphere whose radius is 30 and sphere center is the coordinate origin. The second part of the path is a straight-line path from the second location (0, 30, 0) to the observation location (0, 24, 0).

If the view angle is excessively close to the geometric model, the view angle is at the current location, and the geometric model is not entirely in the field of view of the view angle, the path may include three parts.

A first part is a straight-line path from a current location (a third location) to a first location. An extension line of a connection line between the third location and the first location passes through a preset reference location, the view angle is located at the first location, and the geometric model is entirely located in the field of view of the view angle.

A second part is an arc path from the first location to a second location. A distance from the first location to the reference location is equal to a distance from the second location to the reference location, the arc path is on a sphere that uses the reference location as a sphere center and uses a distance from the first location to the reference location as a radius, and an extension line of a connection line between the second location and the observation location passes through the reference location.

It should be understood that, if a connection line between the first location and the second location does not pass through the reference location, a shortest arc path exists between the first location and the second location on the sphere; or if a connection line between the first location and the second location passes through the reference location, an infinite quantity of arc paths with an equal length exist between the first location and the second location on the sphere, and any arc path may be selected from the infinite quantity of arc paths as the path of the view angle.

A third part is a straight-line path from the second location to the observation location.

For example, if α=90°, the preset reference location is a coordinate origin, the observation location is (0, 24, 0), and the current location of the view angle is (0, 0, 10). If the view angle is at the current location, and the geometric model is not entirely in the field of view of the view angle, the path may include three parts, and the current location of the view angle is the third location.

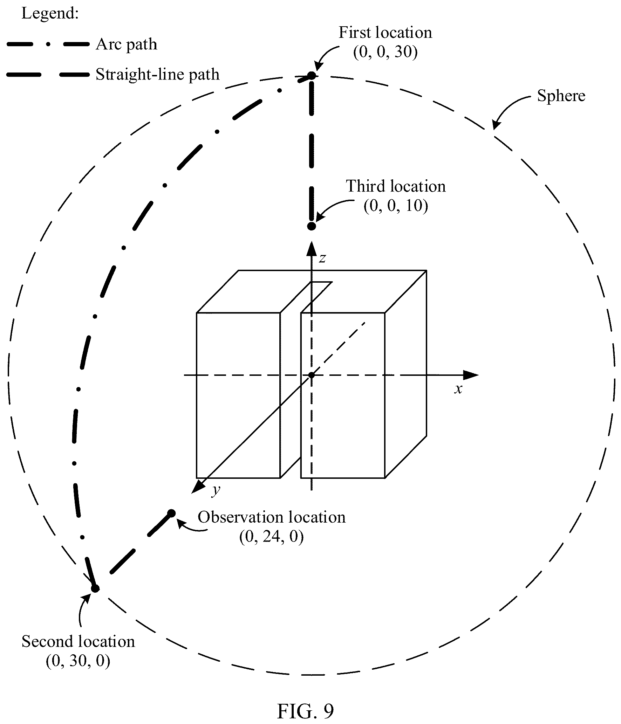

As shown in FIG. 9, the third location is (0, 0, 10), an extension line of a connection line between the third location and the first location passes through the coordinate origin, the view angle is at the first location, and the geometric model is entirely located in the field of view of the view angle. On a z-axis, any point whose z-axis coordinate value is greater than 16 may be used as the first location that meets the foregoing condition. Herein, the first location may be (0, 0, 30). Because the first location is (0, 0, 30), a distance from the second location to the coordinate origin is equal to a distance from the first location to the coordinate origin, and the distances are both 30. The observation location is (0, 24, 0), and the extension line of the connection line between the second location and the observation location passes through the coordinate origin. Therefore, it may be determined that the second location is (0, 30, 0).

The first part of the path is a straight-line path from the third location (0, 0, 10) to the first location (0, 0, 30). The second part of the path is an arc path from the first location (0, 0, 30) to the second location (0, 30, 0) on the sphere whose radius is 30 and sphere center is the coordinate origin. The third part of the path is a straight-line path from the second location (0, 30, 0) to the observation location (0, 24, 0).

It should be understood that, in the embodiment shown in FIG. 9, the first location may alternatively be (0, 0, 24), and the second location is (0, 24, 0), which overlaps the observation location. In this case, a length of the third part of the path may be 0.

It should be further understood that if an extension line of a connection line between the current location and the observation location passes through the preset reference location, the path may include only one straight-line path.

It should be further understood that, if the view angle is excessively far from the geometric model, although the geometric model is entirely located in the field of view of the view angle, a range occupied by the geometric model in the field of view is less than a preset threshold, and the path may also include the foregoing three parts. Details are not described herein again.

In embodiments shown in FIG. 8 and FIG. 9, the view angle may face the preset reference location when the geometric feature is observed at the observation location. Therefore, an observation direction of the view angle does not need to be adjusted. However, in some cases, the view angle may not face the reference location when the geometric feature is observed at the observation location. Therefore, the observation direction of the view angle may need to be adjusted. Therefore, the observation direction of the view angle at the observation location may be calculated based on a condition that the observation direction needs to meet. The observation direction may be represented by a unit vector.

For a geometric feature of a specific type, different users are accustomed to different observation directions. Therefore, the user may preset a correspondence between a type of the geometric feature and a condition that the observation direction meets.

The following lists correspondences between types of some geometric features and conditions that the observation directions meet.

Gap: The observation direction faces the gap, is parallel to two surfaces that form the gap, and is perpendicular to a connection line between two ends of the gap.

Free edge, degenerated edge, overlapping edges, and small edge: The observation direction points to a middle point of the edge.

Puncture: The observation direction points to a midpoint of the edge formed by intersection of two surfaces.

Free surface, degenerated surface, overlapping surfaces, and elongated surface: The observation direction faces and is perpendicular to the surface.

Small angle: The observation direction faces a plane on which the small angle is located and is perpendicular to the plane on which the small angle is located.

Small convex mesa and small concave mesa: The observation direction points to a midpoint of a two-dimensional projection of the mesa on a field of view plane.

Chamfer: The observation direction points to the chamfer and is perpendicular to a chamfer surface.

It should be further understood that the correspondences between the feature types and the conditions that the observation directions meet are merely examples. A correspondence between each feature type and the condition that the observation direction meets is not limited in this application.

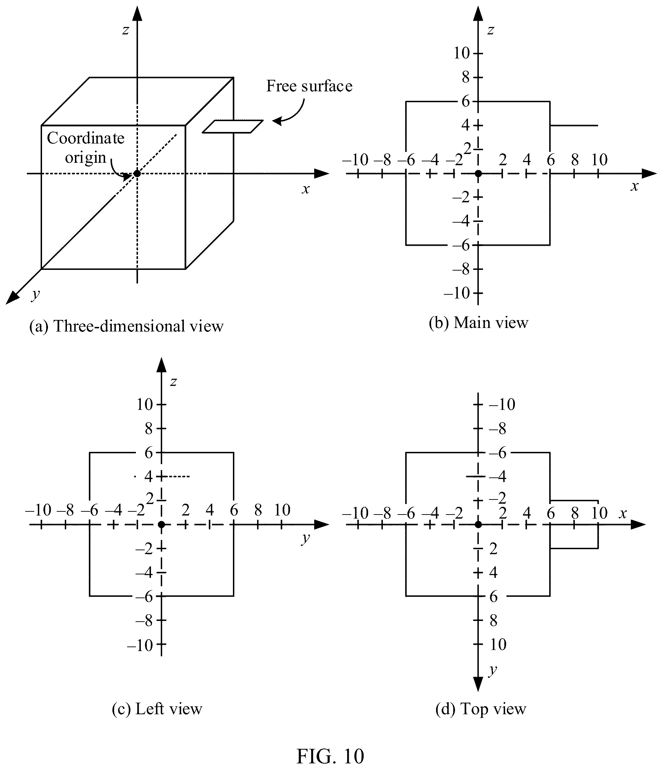

In an example, the geometric model shown in FIG. 10 includes a geometric feature of a free surface type, and the free surface is a rectangular plane including four vertices: (6, 2, 4), (6, -2, 4), (10, 2, 4), and (10, -2, 4).

If an FOV of a view angle is 90 degrees, an observation location of the free surface in the geometric model shown in FIG. 10 may be obtained through calculation based on a condition that the observation location for observing the free surface needs to meet. The observation location of the free surface may be any one of two locations (8, 0, 8) or (8, 0, 0). If the observation location is (8, 0, 8), because the observation direction for observing the free surface meets the following condition: The observation direction faces the free surface and is perpendicular to the free surface, the observation direction (0, 0, -1) may be obtained through calculation. If the observation location is (8, 0, 0), because the observation direction for observing the free surface meets the following condition: The observation direction faces the free surface and is perpendicular to the free surface, the observation direction may be obtained through calculation and is represented by a unit vector (0, 0, 1).

When the view angle is adjusted from the current location to the observation location based on the path, the view angle always faces the coordinate origin. After the view angle is adjusted to the observation location, the view angle faces the observation direction.

In a process of adjusting the view angle from the current location of the geometric model to the observation location of the geometric feature, a view angle animation may be obtained through calculation based on a key frame interpolation method. The view angle animation may be used to describe the process of adjusting the view angle of the geometric model from the current location of the geometric model to the observation location of the geometric feature.

In an example, a two-dimensional projection picture, of the geometric model, that is presented in the display region of the geometric simulation software and that is obtained when the view angle is located at the third location, a two-dimensional projection picture, of the geometric model, that is presented in the display region of the geometric simulation software and that is obtained when the view angle is located at the first location, a two-dimensional projection picture, of the geometric model, that is presented in the display region of the geometric simulation software and that is obtained when the view angle is located at the second location, a two-dimensional projection picture, of the geometric model, that is presented in the display region of the geometric simulation software and that is obtained when the view angle is located at the observation location and the view angle faces the coordinate origin, and a two-dimensional projection picture, of the geometric model, that is presented in the display region of the geometric simulation software and that is obtained when the view angle is located at the observation location and the view angle faces the observation direction are respectively set as a key frame. Then, a plurality of pictures between every two adjacent key frames are calculated based on the key frame interpolation method, and the pictures are pictures presented in the display region of the geometric simulation software in a process of moving the view angle along a path. After the plurality of pictures are obtained through calculation, the plurality of pictures are displayed in a chronological order, and a view angle animation in the process of moving the view angle along the path may be presented in the display region of the geometric simulation software.

The key frame interpolation method based on which the view angle animation is obtained through calculation may be specifically a quaternion interpolation method or another key frame interpolation method. This is not limited in this application.

The geometric model may include a plurality of geometric features, and a geometric feature selected by a user is a target geometric feature. When the target geometric feature is occluded by another geometric feature, the another geometric feature may be displayed semi-transparently, or only a contour line of the another geometric feature may be displayed, which helps the user observe the geometric feature.

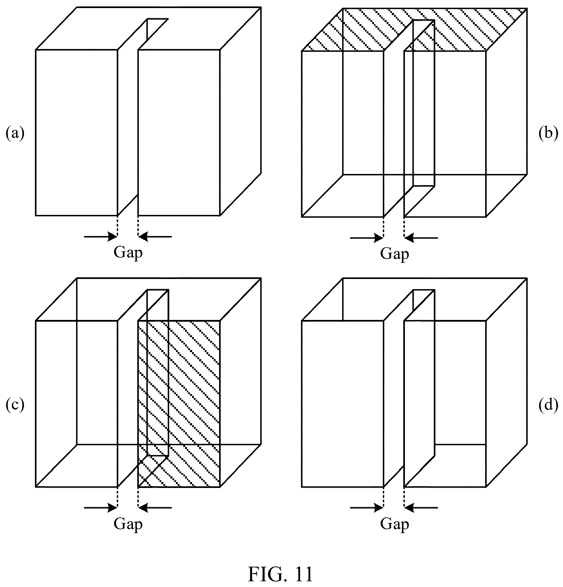

As shown in (a) in FIG. 11, a gap in the geometric model is occluded by two surfaces that do not belong to the gap in the geometric model. The two surfaces are respectively a surface shown by a shadow in (b) in FIG. 11 and a surface shown by a shadow in (c) in FIG. 11. Therefore, the foregoing two surfaces are displayed transparently, and only contour lines of the foregoing two surfaces are retained, to obtain a picture shown in (d) in FIG. 11.

The another geometric feature may be a geometric feature different from the target geometric feature, or may be a part of the target geometric feature.

Optionally, the target geometric feature may also be highlighted, so that the user can observe the geometric feature more conveniently.

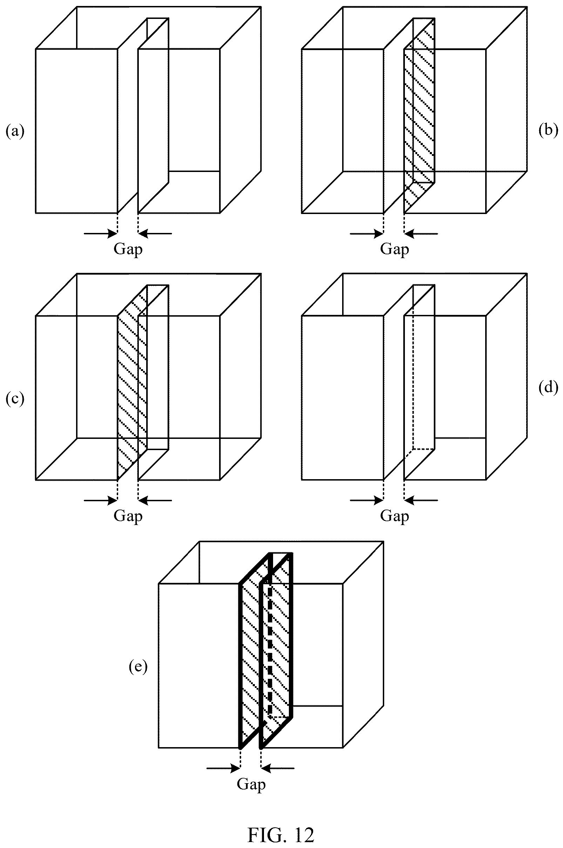

As shown in (a) in FIG. 12, a gap in a geometric model includes two surfaces. The two surfaces are respectively a surface shown by a shadow in (b) in FIG. 12 and a surface shown by a shadow in (c) in FIG. 12. The surface shown by the shadow in (b) in FIG. 12 occludes the surface shown by the shadow in (c) in FIG. 12. Therefore, the surface shown in the shadow in (b) in FIG. 12 is displayed semi-transparently, to obtain a picture shown in (d) in FIG. 12, and a surface and a contour line of the gap are highlighted, to obtain a picture shown in (e) in FIG. 12.

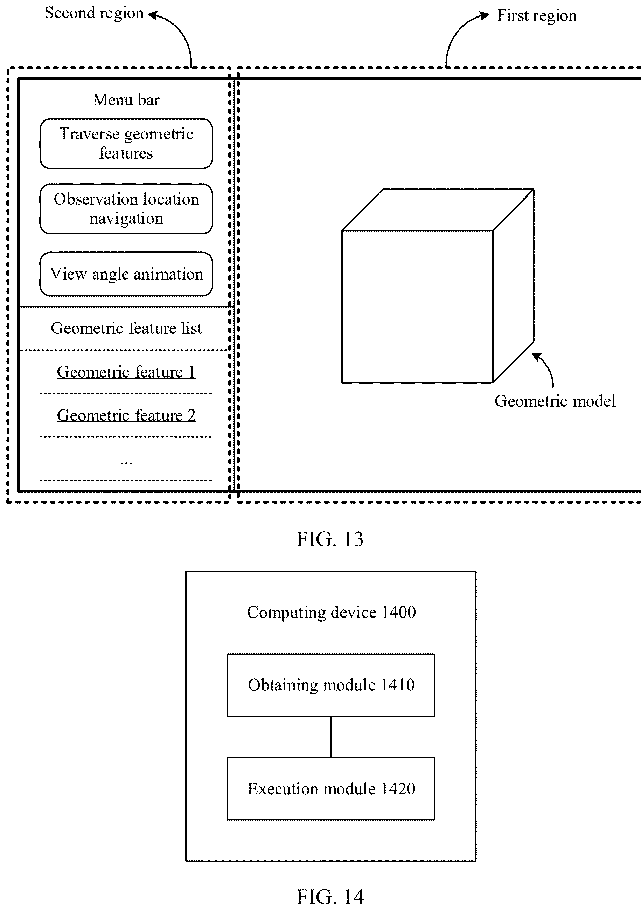

FIG. 13 is a diagram of a display region of geometric simulation software according to an embodiment of this application. In FIG. 13, a display region may include a first region and a second region. The first region may be used to display a geometric model, or may be used to present a view angle animation. The view angle animation includes a scrolling progress bar, and a user may adjust the scrolling progress bar to adjust a progress of the view angle animation. The second region may be used to display a control of a geometric feature. The control of the geometric feature may include a button of "Traverse geometric features", a button of "Observation location navigation", a button of "View angle animation", a link of "Geometric feature 1", a link of "Geometric feature 2", and the like.

A control for traversing the plurality of geometric features is the button of "Traverse geometric features", and controls of the plurality of geometric features are the link of "Geometric feature 1" and the link of "Geometric feature 2".

After an operation of a user on the control for traversing the plurality of geometric features is obtained, a view angle of the geometric model may be sequentially adjusted from a current location of the geometric model to an observation location of each geometric feature based on a sequence of the plurality of geometric features.

One geometric model may include a plurality of geometric features, and the plurality of geometric features may be sorted. A sorting manner may be sorting by name, sorting by modification time, or sorting by impact factor.

Possibilities that different geometric features are defects of the geometric model are different, and an impact factor may represent the possibility that the geometric feature is the defect, so that the plurality of geometric features are sorted based on impact factors. If one geometric model includes a plurality of geometric features of a same type, the plurality of geometric features of the same type may be sorted based on numbers numbered by the geometric simulation software for the plurality of geometric features.

In an example, a geometric model includes three geometric features: a gap, a free surface, and a chamfer, and a value range of an impact factor is 0 to 1. The user sets an impact factor of the gap to 0.3, sets an impact factor of the free surface to 0.2, and sets an impact factor of the chamfer to 0.1. Therefore, the three geometric features are sorted as follows in descending order of impact factors: the gap, the free surface, and the chamfer.

It should be understood that the foregoing values of the impact factors and the sequence of the geometric features are merely examples, and the values of the impact factors and the sequence of the geometric features are not limited in this application.

In the second region, the user taps the button of "Traverse geometric features", and may sequentially adjust the view angle to the observation location of each geometric feature based on the sequence of the plurality of geometric features.

In the second region, the user selects one of the geometric features, and taps the button of "Observation location navigation", to adjust the view angle to an observation location of the geometric feature.

In the second region, the user selects one of the geometric features, and taps the button of "View angle animation", to view a view angle animation of a process of adjusting the view angle to the observation location of the geometric feature. In addition, the view angle animation may be exported, a playback speed may be adjusted, or the scrolling progress bar may be adjusted for repeated viewing.

Based on the foregoing method, the observation location of the geometric feature is automatically located based on the operation of the user on the geometric feature in the geometric model. In comparison with an operation of manually searching for the observation location, this improves efficiency of locating the geometric feature in the geometric model to the corresponding observation location.

FIG. 14 is a block diagram of a computing device according to an embodiment of this application. The computing device may correspond to the computing device in the foregoing method embodiment, and is configured to implement a corresponding function of the computing device. As shown in FIG. 14, a computing device 1400 may include an obtaining module 1410 and an execution module 1420.

The obtaining module 1410 may be configured to obtain an operation of a user on a geometric feature in a geometric model; and the execution module 1420 may be configured to adjust a view angle of the geometric model from a current location of the geometric model to an observation location of the geometric feature. The observation location of the geometric feature is a location at which the geometric feature is presented to the user.

Optionally, the execution module 1420 may be configured to sequentially adjust, based on a sequence of a plurality of geometric features, the view angle of the geometric model from the current location of the geometric model to an observation location of each geometric feature.

Optionally, the execution module 1420 may be further configured to generate a view angle animation in a process of adjusting the view angle of the geometric model from the current location of the geometric model to the observation location of the geometric feature. The view angle animation is used to describe the process of adjusting the view angle of the geometric model from the current location of the geometric model to the observation location of the geometric feature.

Optionally, the execution module 1420 may be further configured to present the view angle animation in a first region.

Optionally, the execution module 1420 may be further configured to adjust a progress of the view angle animation in response to an operation of the user on a scrolling progress bar.

Optionally, the execution module 1420 may be further configured to determine the observation location of the geometric feature based on a type of the geometric feature.

Optionally, the execution module 1420 may be further configured to determine a path for adjusting the view angle of the geometric model from the current location of the geometric model to the observation location of the geometric feature. The path includes at least one of the following: an arc path on a sphere that uses a preset reference location as a sphere center, a straight-line path that passes through the observation location of the geometric feature, and a straight-line path that passes through the current location of the geometric model.

Optionally, the execution module 1420 may be further configured to: when a target geometric feature is occluded by another geometric feature, display the another geometric feature semi-transparently, or display only a contour line of the another geometric feature.

Optionally, the execution module 1420 may be further configured to highlight the target geometric feature.

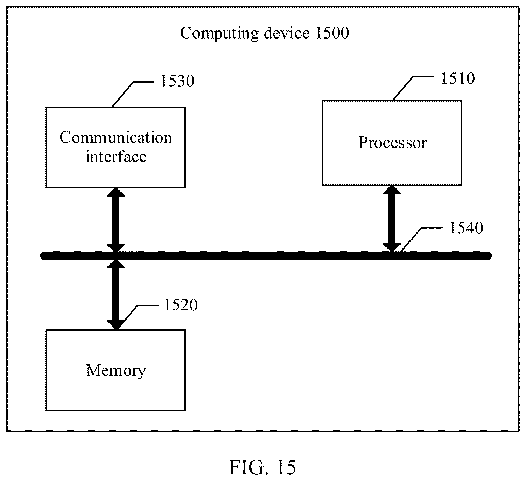

FIG. 15 is another block diagram of a computing device according to an embodiment of this application. As shown in FIG. 15, a computing device 1500 may include at least one processor 1510, and may be configured to implement a function of the computing device in the foregoing method embodiment. For details, refer to the detailed descriptions in the method examples. Details are not described herein again.

The computing device 1500 may further include a memory 1520, configured to store program instructions and/or data. The memory 1520 is coupled to the processor 1510. The coupling in this application may be an indirect coupling or a communication connection between apparatuses, units, or modules in an electrical form, a mechanical form, or another form, and is used for information exchange between the apparatuses, the units, or the modules. The processor 1510 may cooperate with the memory 1520. The processor 1510 can execute the program instructions stored in the memory 1520. At least one of the at least one memory may be included in the processor.

The computing device 1500 may further include a communication interface 1530, configured to communicate with another device through a transmission medium, so that an apparatus in the apparatus 1500 can communicate with the another device. The communication interface 1530 may be, for example, a transceiver, an interface, a bus, a circuit, or an apparatus that can implement a transceiver function. The processor 1510 may receive and send data and/or information through the communication interface 1530, and is configured to implement the geometric model navigation method in the embodiment corresponding to FIG. 3.

A specific connection medium between the processor 1510, the memory 1520, and the communication interface 1530 is not limited in this application. In this application, in FIG. 15, the processor 1510, the memory 1520, and the communication interface 1530 are connected through a bus 1540. The bus 1540 is represented by a bold line in FIG. 15, and a connection manner between other components is merely described as an example, and is not limited thereto. The bus may be classified as an address bus, a data bus, a control bus, and the like. For ease of representation, only one bold line is used to represent the bus in FIG. 15, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, the steps, and the logical block diagrams disclosed in this application. The general purpose processor may be a microprocessor or any conventional processor or the like. The steps of the method disclosed with reference to this application may be directly performed by a hardware processor, or may be performed by using a combination of hardware in the processor and a software module.

According to the methods provided in this application, this application further provides a computer-readable storage medium. The computer-readable storage medium stores program code. When the program code is run on a computer, the computer is enabled to perform the geometric model navigation method in the foregoing embodiment.

According to the method provided in this application, this application further provides a computer program product. The computer program product includes computer program code. When the computer program code is run on a computer, the computer is enabled to perform the geometric model navigation method in the foregoing embodiment.

All or some of the technical solutions provided in this application may be implemented by using software, hardware, firmware, or any combination thereof. When software is used to implement the technical solutions, all or some of the technical solutions may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A geometric model navigation method, applied to a computing device and comprising:

   obtaining an operation of a user on a geometric feature in a geometric model; and

   adjusting a view angle of the geometric model from a current location of the geometric model to an observation location of the geometric feature, wherein the observation location of the geometric feature is a location at which the geometric feature is presented to the user.

2. The method according to claim 1, wherein the geometric model comprises a plurality of geometric features, and adjusting the current location of the geometric model to the observation location of the geometric feature comprises:
   sequentially adjusting, based on a sequence of the plurality of geometric features, the view angle of the geometric model from the current location of the geometric model to an observation location of each geometric feature.

3. The method according to claim 2, wherein the sequence of the plurality of geometric features is a sequence of impact factors of the plurality of geometric features on the geometric model.

4. The method according to claim 1, wherein the computing device comprises a display, a display region of the display comprises a first region and a second region, the first region is used to display the geometric model, and the second region is used to display a control of the geometric feature; and
   the operation of the user on the geometric feature in the geometric model comprises an operation of the user on a geometric feature in the first region or an operation on a control of the geometric feature in the second region.

5. The method according to claim 4, wherein the control of the geometric feature comprises a control for traversing a plurality of geometric features or controls of a plurality of geometric features, and the traversing of the plurality of geometric features indicates to sequentially adjust the view angle of the geometric model to an observation location corresponding to each geometric feature.

6. The method according to any one of claims 1 to 5, wherein the method further comprises:
   generating a view angle animation in a process of adjusting the view angle of the geometric model from the current location of the geometric model to the observation location of the geometric feature, wherein the view angle animation is used to describe the process of adjusting the view angle of the geometric model from the current location of the geometric model to the observation location of the geometric feature.

7. The method according to claim 6, wherein the method further comprises:

presenting the view angle animation in the display region of the display of the computing device.

8. The method according to claim 6 or 7, wherein the view angle animation comprises a scrolling progress bar, and the method further comprises:
adjusting a progress of the view angle animation in response to an operation of the user on the scrolling progress bar.

9. The method according to any one of claims 1 to 8, wherein the method further comprises:
determining the observation location of the geometric feature based on a type of the geometric feature.

10. The method according to claim 9, wherein

if the type of the geometric feature is a gap, the observation location is located on a plane that has equal distances from two surfaces forming the gap, distances from the observation location to two ends of the gap are equal, and a length of the gap accounts for a preset proportion of a field of view length, wherein the gap is a gap between two surfaces that are not in contact with each other, and a distance between the two surfaces is less than a preset gap threshold;
if the type of the geometric feature is a free edge, a degenerated edge, overlapping edges, or a small edge, the observation location is located on a perpendicular bisector of the edge, and a length of the edge accounts for a preset proportion of a field of view length, wherein the free edge is an edge associated with at most one surface, the degenerated edge is an edge whose length is less than or equal to a preset degenerated edge threshold, the overlapping edges are two edges between which a distance is less than a preset overlapping threshold, and the small edge is an edge whose length is less than a preset small edge threshold and greater than the degenerated edge threshold;
if the type of the geometric feature is a puncture, the observation location is located on a perpendicular bisector of an edge formed by intersection of two surfaces, and a length of the edge accounts for a preset proportion of a field of view length, wherein the puncture indicates that two surfaces intersect each other;
if the type of the geometric feature is a free surface, a degenerated surface, overlapping surfaces, or an elongated surface, the observation location is located on a normal line of a center point of the surface, and a straight-line distance between two ends of a longest chain of the surface accounts for a preset proportion of a field of view length, wherein the free surface is a surface associated with at most one surface, the degenerated surface is a surface whose area is less than a preset degenerated surface threshold and that has a degenerated edge, the overlapping surfaces are two surfaces between which a distance is less than an overlapping threshold, and the elongated surface is a surface whose area divided by a length of a longest chain is less than a preset elongated surface threshold, wherein the longest chain is a longest chain formed by connecting, in series, all adjacent edges on the surface between which an included angle is less than a preset angle;
if the type of the geometric feature is a small angle, the observation location is located on a perpendicular bisector that is of a longer edge in two edges forming the small angle and that is in a direction of a normal vector of a plane on which the small angle is located, and a length of the longer edge accounts for a preset proportion of a field of view length, wherein the small angle is an angle less than a preset small angle threshold;
if the type of the geometric feature is a small concave mesa or a small convex mesa, the observation location is located on a plane on which the mesa is located, and a length of a two-dimensional projection of the mesa on a field of view plane accounts for a preset proportion of a field of view length, wherein the small concave mesa is a concave mesa whose concave distance is less than a preset small mesa threshold, and the small convex mesa is a convex mesa whose protrusion distance is less than the preset small mesa threshold; or
if the type of the geometric feature is a chamfer, the observation location is located on a normal line of a chamfer surface, and a length of an intersection line between the chamfer surface and an adjacent surface accounts for a preset proportion of a field of view length.

11. The method according to any one of claims 1 to 10, wherein the method further comprises:

determining a path for adjusting the view angle of the geometric model from the current location of the geometric model to the observation location of the geometric feature, wherein the path comprises at least one of the following:
an arc path on a sphere that uses a preset reference location as a sphere center, a straight-line path that passes through the observation location of the geometric feature, and a straight-line path that passes through the current location of the geometric model.

12. The method according to any one of claims 1 to 11, wherein the geometric model comprises the plurality of geometric features, a geometric feature selected by the user is a target geometric feature, and the method further comprises:
when the target geometric feature is occluded by another geometric feature, displaying the another geometric feature semi-transparently, or displaying only a contour line of the another geometric feature.

13. The method according to claim 12, wherein the method further comprises:
highlighting the target geometric feature.

14. A computing device, comprising a module configured to perform the method according to any one of claims 1 to 13.

15. A computing device, comprising a memory and a processor, wherein

the memory is configured to store a computer program; and
the processor is configured to invoke and execute the computer program, to enable the computing device to perform the method according to any one of claims 1 to 13.

16. A computer-readable storage medium, wherein the computer-readable storage medium stores a computer program, and when the computer program is executed by a processor, the method according to any one of claims 1 to 13 is implemented.

1/14

FIG. 1

(a) Gap

(b) Free edge

(c) Free surface

(d) Degenerated surface / Degenerated edge

(e) Overlapping edges/surfaces

(f) Puncture

(g) Elongated surface / Longest chain

(h) Small angle

(i) Small edge

(j) Small convex mesa / Protrusion distance

(k) Small concave mesa / Concave distance

(l) Chamfer

FIG. 2

<u>300</u>

310

| Obtain an operation of a user on a geometric feature in a geometric model |

320

| Adjust a view angle of the geometric model from a current location of the geometric model to an observation location of the geometric feature, where the observation location of the geometric feature is a location at which the geometric feature is presented to the user |

FIG. 3

Geometric model

(a)

z

View angle

Coordinate origin

x

y

(b)

FIG. 4

EP 4 685 753 A1

(a) Main view

(b) Left view

(c) Top view

FIG. 5

(a) Three-dimensional view

(b) Main view

(c) Left view

(d) Top view

FIG. 6

FIG. 7

FIG. 8

FIG. 9

(a) Three-dimensional view

(b) Main view

(c) Left view

(d) Top view

FIG. 10

FIG. 11

FIG. 12

Second region ◄                ► First region

**Menu bar**

Traverse geometric features

Observation location navigation

View angle animation

Geometric feature list

Geometric feature 1

Geometric feature 2

...

Geometric model

**FIG. 13**

Computing device 1400

Obtaining module 1410

Execution module 1420

**FIG. 14**

Computing device 1500

Communication interface — 1530

Processor — 1510

— 1540

Memory — 1520

FIG. 15

## INTERNATIONAL SEARCH REPORT

| International application No. |
|---|
| **PCT/CN2024/089432** |

**A.    CLASSIFICATION OF SUBJECT MATTER**

G06T19/20(2011.01)i

According to International Patent Classification (IPC) or to both national classification and IPC

**B.    FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS: CNTXT; DWPI; VEN; USTXT; EPTXT; CNKI; IEEE: 几何模型, 三维, 视场角, 调整, 旋转, 控件, 用户, 位置, 动画, 透明, 排序, geometric model, 3D, FOV, adjust, rotate, control, user, location, animation, transparent, sort

**C.    DOCUMENTS CONSIDERED TO BE RELEVANT**

| Category* | Citation of document, with indication, where appropriate, of the relevant passages | Relevant to claim No. |
|---|---|---|
| X | CN 101751481 A (CHIEF LAND ELECTRONIC CO., LTD.) 23 June 2010 (2010-06-23) description, paragraphs 40-58 | 1, 4, 9, 11-16 |
| X | CN 115168925 A (SUZHOU CAD SOFTWARE CO., LTD.) 11 October 2022 (2022-10-11) description, paragraphs 105-180 | 1, 4, 9, 11-16 |
| Y | CN 101751481 A (CHIEF LAND ELECTRONIC CO., LTD.) 23 June 2010 (2010-06-23) description, paragraphs 40-58 | 2-3, 5-8 |
| Y | CN 111243107 A (ADOBE SYSTEMS INC.) 05 June 2020 (2020-06-05) description, paragraphs 12-57 | 2-3, 5 |
| Y | 张丽莉 等 (ZHANG, Lili et al.). "地学三维曲面动态显示软件的设计与实现 (Design and Realization of the Animation Display Software of Geoscientific 3-D Surface Graphs)" 计算机工程 (Computer Engineering). Vol. 29, No. 12, 31 July 2003 (2003-07-31), ISSN: 1000-3428, page 13 | 6-8 |
| Y | CN 115168925 A (SUZHOU CAD SOFTWARE CO., LTD.) 11 October 2022 (2022-10-11) description, paragraphs 105-180 | 2-3, 5-8 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2024** | **26 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/089432**

### C. DOCUMENTS CONSIDERED TO BE RELEVANT

| Category* | Citation of document, with indication, where appropriate, of the relevant passages | Relevant to claim No. |
|---|---|---|
| A | US 2016239584 A1 (TRIBASE SYSTEMS, INC.) 18 August 2016 (2016-08-18)<br>entire document | 1-16 |
| A | 石端虎 等 (SHI, Duanhu et al.). "工字型焊件中批量小缺陷的空间位置可视化<br>(Visualization of Spatial Position for Bulk Small Defects in I-shaped Laser Weldments)"<br>热加工工艺 *(Hot Working Technology)*, Vol. 39, No. 13, 15 July 2010 (2010-07-15),<br>ISSN: 1001-3814,<br>pages 161-163 and 166 | 1-16 |

Form PCT/ISA/210 (second sheet) (July 2022)

# EP 4 685 753 A1

| INTERNATIONAL SEARCH REPORT | International application No. |
| Information on patent family members | PCT/CN2024/089432 |

| Patent document cited in search report | | | Publication date (day/month/year) | Patent family member(s) | | | Publication date (day/month/year) |
|---|---|---|---|---|---|---|---|
| CN | 101751481 | A | 23 June 2010 | None | | | |
| CN | 115168925 | A | 11 October 2022 | WO | 2024012208 | A1 | 18 January 2024 |
| | | | | CN | 115168925 | B | 09 April 2024 |
| | | | | CN | 118051966 | A | 17 May 2024 |
| CN | 111243107 | A | 05 June 2020 | US | 2020118347 | A1 | 16 April 2020 |
| | | | | US | 10957117 | B2 | 23 March 2021 |
| | | | | US | 2021256775 | A1 | 19 August 2021 |
| | | | | US | 11694416 | B2 | 04 July 2023 |
| | | | | GB | 201911514 | D0 | 25 September 2019 |
| | | | | GB | 2578190 | A | 22 April 2020 |
| | | | | GB | 2578190 | B | 30 August 2023 |
| | | | | DE | 102019005635 | A1 | 16 April 2020 |
| | | | | AU | 2019213451 | A1 | 18 June 2020 |
| | | | | AU | 2019213451 | B2 | 23 December 2021 |
| US | 2016239584 | A1 | 18 August 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310475184